# EUROPÄISCHE PATENTANMELDUNG

(11) **EP 1 632 403 A1**
(43) Veröffentlichungstag der Anmeldung: **08.03.2006**
(21) Anmeldenummer: 05107083.7
(22) Anmeldetag: 01.08.2005
(51) Int. Cl.: B60R 21/01, B60N 2/48

(54) **Passagierschutzeinrichtung in einem Fahrzeug**

(30) Priorität: 02.09.2004 DE 102004042959
(71) Anmelder: ROBERT BOSCH GMBH, 70442 Stuttgart (DE)
(72) Erfinder: Herrmann, Thomas, 74613, Oehringen (DE); Engelberg, Thomas, 31137, Hildesheim (DE); Spaeth, Stephan, 71634, Ludwigsburg (DE)

(57) **Zusammenfassung**

Es wird eine Passagierschutzeinrichtung mit einer Passagierschutzeinheit in einem Fahrzeug mit wenigstens einem Sensor (11) vorgeschlagen, der die Bewegung wenigstens eines Körperteils (3) des Passagiers (1) in dem Fahrzeug erfasst. Ferner ist eine Auswerteeinheit (5,12) zur Ansteuerung einer Passagierschutzeinheit in dem Fahrzeug vorgesehen, wobei die Passagierschutzeinheit in Abhängigkeit von der erfassten Bewegung des wenigstens einen Körperteils (3) angesteuert wird.

## Beschreibung

### Stand der Technik

Die Erfindung geht aus von einer Passagierschutzeinrichtung in einem Fahrzeug nach der Gattung des Hauptanspruchs. Es sind schon Passagierschutzeinrichtungen in Fahrzeugen bekannt, die einen Passagier bei einer Kollision des Fahrzeugs schützen, um die Unfallfolgen zu vermindern. Als Passagierschutzeinheiten sind insbesondere sogenannte Air-Bags bekannt, bei denen durch einen Treibsatz ein Luftkissen aufgeblasen wird, um bei einer Kollision einen Passagier aufzufangen. Ferner sind auch Systeme zur Gurtstraffung bekannt, die bei einer Kollision einen Sicherheitsgurt straffen, um den Fahrer in Position zu halten. Die Schutzeinrichtungen dienen insbesondere dazu, die Kollision des Fahrers mit Fahrzeugteilen zu verhindern und andererseits, eine Beschleunigung, die auf den Fahrer einwirkt, zu begrenzen. Ferner ist es hierzu auch bekannt, an dem Fahrersitz Kopfstützen vorzusehen. Hierzu sind sogenannte Crash-aktive Kopfstützen bekannt, bei denen die Position der Kopfstütze im Kollisionsfall verändert wird. Insbesondere wird hierbei die Kopfstütze nach vorne bewegt. Eine Kollision wird dabei im allgemeinen dadurch ermittelt, dass im Fahrzeug Beschleunigungssensoren vorgesehen sind, mit denen eine plötzliche Beschleunigung bzw. Verzögerung des Fahrzeugs erfasst werden kann. In Abhängigkeit von der erfassten Beschleunigung werden die oben genannten Passagierschutzeinheiten ausgelöst. Die Auslösung wird dabei z.B. über eine Sitzmatte derart gesteuert, dass nur diejenigen Sicherheitseinrichtungen an Plätzen im Fahrzeug auslösen, an denen sich auch ein Passagier befmdet, der von der Auslösung der entsprechenden Sicherheitseinrichtung profitieren kann.

### Vorteile der Erfindung

Die erfmdungsgemäße Passagierschutzeinrichtung mit den Merkmalen des Hauptanspruchs hat demgegenüber den Vorteil, dass eine Bewegung wenigstens eines Körperteils des Passagiers in dem Fahrzeug durch einen Innenraumsensor erfasst wird. Während eine Messung mit Beschleunigungssensoren lediglich die auf das Fahrzeug wirkenden Beschleunigungen erfassen kann, kann mit einer erfindungsgemäßen Passagierschutzeinrichtung die Reaktion einer Passagierschutzeinheit auf die tatsächlichen Körperbewegungen angepasst werden, indem die Körperbewegung, zumindest die Körperbewegung wenigstens eines Körperteils, unmittelbar erfasst und für die Ansteuerung der Passagierschutzeinheit ausgewertet wird. Damit kann sowohl der Auslösezeitpunkt einer Passagierschutzeinheit, als auch eine räumliche Reaktion bzw. räumliche Verstellung einer Passagierschutzeinheit an den tatsächlichen Bewegungsablauf des Passagiers im Kollisionsfall angepasst werden. Während die Beschleunigungswerte jeweils fahrzeugspezifisch festgelegt werden müssen, um eine korrekte Auswertung zu gewährleisten, kann die Auswertung einer Bewegung eines Körperteils eines Passagiers fahrzeugunabhängig erfolgen. Ein Implementierungsaufwand wird hierdurch vermindert.

Durch die in den Unteransprüchen aufgeführten Maßnahmen sind vorteilhafte Weiterbildungen und Verbesserungen der im Hauptanspruch angegebenen Passagierschutzeinrichtung möglich. Besonders vorteilhaft ist es, der Auswerteeinheit eine Speichereinheit zuzuordnen, in der Grenzwerte zur Ermittlung kritischer Bewegungsabläufe des wenigstens einen Körperteils abgelegt sind. Durch einen Vergleich mit diesen Grenzwerten können zufällige Bewegungsabläufe herausgefiltert werden, die mit einer kollisionsbedingten passiven Bewegung des Passagiers bzw. des entsprechenden Körperteils verwechselt werden könnten. Wird z.B. der Kopf des Passagiers betrachtet, kann z.B. anhand der Auswertung des Bewegungsablaufs zwischen ruckartigen Kopfbewegungen infolge eines Niesens oder einer Unfallfolge sicher unterschieden werden. Bevorzugt können die Auswertungen dieser gespeicherten Daten mit der Auswertung weiterer Sensoren im Fahrzeug fusioniert werden.

Besonders vorteilhaft ist es, den Kopf des Fahrers zu erfassen und die Bewegung des Kopfes auszuwerten. Denn bei Krafffahrzeugunfällen besteht ein besonderes Risiko für die Halswirbelsäule. Der Passagier, der sich in einem plötzlich gebremsten Fahrzeug nach vorne bewegt, wird durch den Gurt aufgefangen. Infolge dieses Auffangens kann es dazu kommen, dass der Kopf wiederum in einer Art Abprallbewegung nach hinten geschleudert wird. Zwar ist bei modernen Fahrzeugen eine Kopfstütze vorgesehen, um die Kopfbewegung nach hinten aufzufangen. Ist die Kopfstütze jedoch falsch eingestellt, falsch positioniert oder zu weit vom Kopf entfernt, können dennoch infolge eines langen Beschleunigungsweges oder gegebenenfalls infolge einer falschen Einstellung der Kopfstütze ein Überstrecken der Halswirbelsäule bei einer Rückbewegung des Kopfes auftreten. Die hierbei auf die Wirbelsäule wirkenden Beschleunigungswerte können zu schwerwiegenden Verletzungen führen. Durch die erfindungsgemäße Erfassung des Kopfes und Anpassung der Passagierschutzeinheit, insbesondere einer Kopfstütze und/oder Rücklehnenpositionierung, können die Risiken für eine Halswirbelsäulenverletzung verringert werden. Durch die Erfassung des Kopfes mit einem Innenraumsensor im Fahrzeug kann im Vergleich zu einer reinen Erfassung von Beschleunigungswerten des Fahrzeugs besser auf eine tatsächliche Kopfbewegung reagiert werden. Zudem kann unmittelbar eine fahrerbezogene Erfassung und Auswertung erfolgen, bei der die Fahrergröße berücksichtigt wird.

Bevorzugt erfolgt eine Erfassung mit einem optischen Sensor, der ein Kamerabild erfasst und eine Körperbewegung durch einen Vergleich von zeitlich aufeinanderfolgend aufgenommenen Kamerabildern ermöglicht. Vorteilhaft ist insbesondere die Verwendung einer 3D-Kamera, welche Tiefenbilder erzeugt und so die räumliche Messung der Position und der Lage von Körperteilen und Objekten ermöglicht. Jedoch ist es auch möglich, statt dessen oder ergänzend hierzu weitere Sensoren im Fahrzeuginnenraum anzuordnen. Insbesondere können auch kapazitive Sensoren, die eine Änderung des elektrischen Feldes erfassen, oder Ultraschallsensoren verwendet werden, die eine Abstandsmessung mittels eines Echoverfahrens zu dem jeweiligen Körperteil durchführen.

Weiterhin ist es vorteilhaft, eine Filtereinheit vorzusehen, bei der die zuvor bestimmte Position des jeweiligen Körperteils erfasst wird, um für eine erneute Messung zu prädizieren, an welcher Stelle sich das Körperteil nun befinden wird. Insbesondere wird hierbei neben der Position des Körperteils eine zuvor bestimmte Bewegungsgeschwindigkeit des Körperteils berücksichtigt. Hierdurch kann die Genauigkeit bei einer Erfassung erhöht und insbesondere die Erfassung beschleunigt werden. Wird eine Prädiktion vorgenommen, muss z.B. bei einem Bildvergleich nicht das gesamte Bild ausgewertet werden, sondern es wird bevorzugt ein Teilbereich des Bildes zuerst ausgewertet. Gegebenenfalls kann, wenn das entsprechende Körperteil in diesem Teilbereich erfasst wird, auf eine weitere Auswertung des Bildes verzichtet werden. Hierdurch wird die Erfassungsgeschwindigkeit der Passagierschutzeinrichtung erhöht.

Weiterhin ist es vorteilhaft, eine Bewertungseinheit vorzusehen, mittels der die Passagierschutzeinheit in Abhängigkeit von der ermittelten Größe und/oder dem Gewicht des Passagiers angesteuert wird. Hiermit kann gezielt auf die Größe bzw. das Gewicht des Passagiers reagiert werden, so dass geeignete Schutzmaßnahmen ergriffen werden können. Z.B. kann die Kopfstütze in Abhängigkeit von der Größe auf einen vorgegebenen Wert eingestellt werden. Der Fülldruck des Airbags bzw. die Gurtstraffung kann in Abhängigkeit von der Größe oder dem Gewicht des Passagiers gewählt werden.

Weiterhin ist es vorteilhaft, dass eine Betätigung der Passagierschutzeinheit dann unterdrückt wird, wenn auf einem dem Sensor zugeordneten Sitzplatz im Fahrzeug kein Passagier erfasst wird. Hiermit wird eine unnötige Auslösung der Passagierschutzeinheit vermieden. Insbesondere wird damit vermieden, dass z.B. ein Airbag unnötig ausgelöst wird, durch den ein Kind in einem Kindersitz gefährdet werden könnte, oder dessen Instandsetzung recht aufwändig wäre. Außerdem wird damit vermieden, dass z.B. eine crash-aktive Kopfstütze bei einem Zusammenstoß unnötig ausgelöst wird.

### Zeichnung

Ausführungsbeispiele der Erfindung sind in der Zeichnung dargestellt und in der nachfolgenden Beschreibung näher erläutert. Es zeigen
Figur 1 ein erstes Ausführungsbeispiel für eine erfindungsgemäße Passagierschutzeinrichtung,
Figur 2 ein Ausführungsbeispiel für ein Steuergerät einer erfindungsgemäßen Passagierschutzeinrichtung,
Figur 3 ein Ablauf einer Körperbewegung eines Passagiers zur Erläuterung der erfindungsgemäßen Passagierschutzeinrichtung und des erfindungsgemäßen Verfahrens,

### Beschreibung des Ausführungsbeispiels

Die erfmdungsgemäße Passagierschutzeinrichtung kann für beliebige Fahrzeuge verwendet werden. Insbesondere ist ihre Verwendung in Kraftfahrzeugen vorteilhaft, bei denen im Kollisionsfall hohe Beschleunigungswerte auftreten können, die aber durch geeignete Schutzmaßnahmen verringert werden können. Erfindungsgemäß werden hierbei ein oder mehrere Körperteile der Passagiere durch geeignete, insbesondere im Innenraum des Fahrzeugs angeordnete Sensoren überwacht. Die Überwachung erfolgt dabei derart, dass eine Bewegung dieser Körperteile ermittelt wird. Aus der Bewegung wird bevorzugt eine Beschleunigung ermittelt, mit der sich die erfassten Körperteile im Fahrzeuginnenraum bewegen. Wird hierbei eine vorgegebene Beschleunigungsgrenze überschritten, so ist davon auszugehen, dass die Bewegung des Körperteils nicht auf einer Bewegung beruht, die durch den Passagier selber gesteuert bzw. verursacht wurde. Vielmehr ist dann von einer Bewegung auszugehen, die infolge einer plötzlichen Beschleunigung des Fahrzeugs (z.B. aufgrund eines Aufpralls auf das Fahrzeugheck) hervorgerufen wurde. Somit können zufällige Körperbewegungen, wie z.B. ein Schlagen nach einem Insekt oder ein Niesen, bei der Analyse der Bewegung ausgeschlossen werden. Ebenso können langsame Verzögerungen infolge eines Bremsvorgangs oder einer nur leichten Kollision des Fahrzeugs ebenfalls ausgeschlossen werden. Wird das Fahrzeug jedoch stark verzögert und kommt es infolge dessen zu einer sehr ruckartigen Körperbewegung, so kann diese sicher erfasst werden. Es können beliebige Körperteile, wie z.B. ein Arm, der Oberkörper oder auch die Beine des Fahrers beobachtet werden. Der Kopf des Passagiers jedoch kann besonders großen Beschleunigungen relativ zum Oberkörper ausgesetzt werden, da der Kopf nicht durch den Sicherheitsgurt selbst zurückgehalten wird. Da insbesondere aber für den Kopf und hierbei für die Halswirbelsäule eine besonders hohe Verletzungsgefahr besteht, wird die vorliegende Erfindung im Folgenden am Beispiel eines Sensors zur Beobachtung des Kopfes eines Passagiers im Fahrzeug erläutert. Unter dem Ausdruck "Passagier" sind hierbei nicht nur passive, mitfahrende Fahrgäste im Fahrzeug zu verstehen, sondern auch ein Fahrer selbst, der das Fahrzeug steuert.

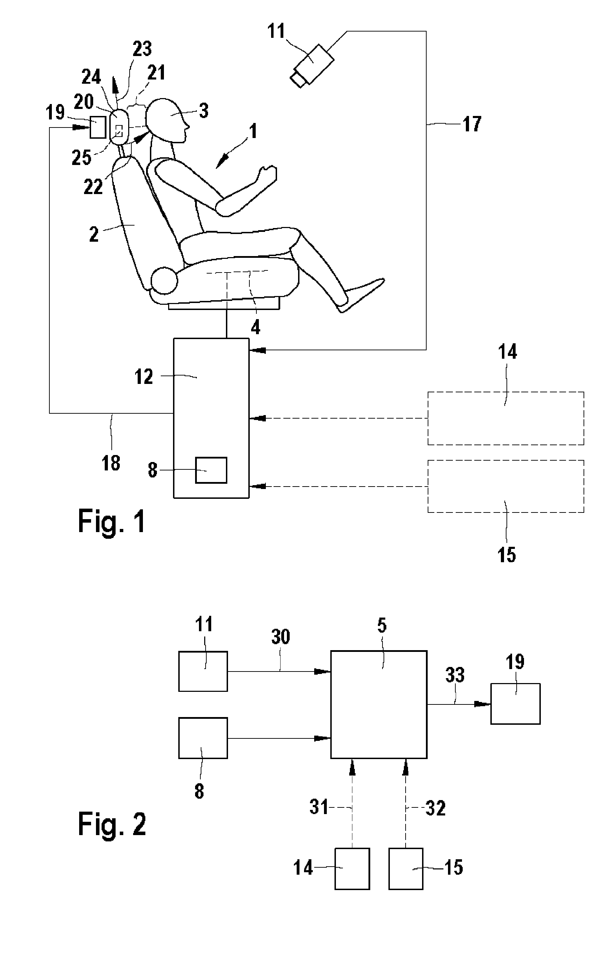

In der Figur 1 ist eine erfindungsgemäße Passagierschutzeinrichtung schematisch dargestellt. Ein Passagier 1 hat im Fahrzeug auf einem Sitz 2 platzgenommen. Der Passagier wird von einem Sensor 11 beobachtet, der in einer Ausführungsform als ein CMOS-Kamerasensor ausgeführt ist. Der Sensor 11 ist dabei so ausgerichtet, dass er Bewegungen des Passagiers im Kopfbereich, im Schulterbereich und im Halsbereich erfasst. Der Sensor ist hierfür insbesondere als ein tiefenbildgebender Videosensor ausgeführt. Der Sensor 11 gibt in einer ersten Ausführungsform eine Bildinformation an eine Auswerteeinheit 12 zur weiteren Auswertung weiter. In einer bevorzugten Ausführungsform kann eine erste Auswertung der Bildsignale auch in dem Sensor 11 erfolgen. Z.B. kann die Position des Kopfes 3 des Passagiers 1 von dem Sensor 11 ermittelt werden. Der Sensor 11 ist ferner dazu ausgelegt, die Größe des Passagiers 1 zu erfassen und an die Auswerteeinheit 12 zur übermitteln. Hierfür ist bei Einbau des Sensors in das Fahrzeug eine Kalibrierung erforderlich. Ferner kann auch eine gesamte Positionierung des Oberkörpers von dem Sensor 11 ebenfalls erfasst werden, so dass einerseits die dreidimensional bestimmte Kopfposition, als auch eine Position des Oberkörpers des Passagiers 1 an die Auswerteeinheit 12 übermittelt wird. Eine Sitzbelegung kann ferner über eine Sitzmatte 4 elektronisch erfasst und an die Auswerteeinheit 12 übermittelt werden. Sofern über die Sitzmatte 4 nicht bestimmt wird, dass die Sitzbelegung sich geändert hat, werden beide Größen, also die Kopfposition und die Körperhaltung, über die Zeit verfolgt.

In einer bevorzugten Ausführungsform erhält die Auswerteeinheit 12 ferner Daten eines oder mehrerer Beschleunigungssensoren 14, die im Fahrzeug angeordnet sind. Mittels dem oder der Beschleunigungssensoren 14 werden die Verzögerungen zumindest in Fahrtrichtung, gegebenenfalls aber auch in andere Richtungen in Bezug auf das Fahrzeug ermittelt. Gegebenenfalls können auch weiteren Sensoren 15 im Fahrzeug ausgewertet werden. Die weiteren Sensoren 15 können z.B. Sensoren zur Erfassung des Fahrzeugumfeldes sein, um eine Annäherung von Hindernissen an das Fahrzeug zu erfassen und um bereits vor einem Aufprall eine Möglichkeit eines Aufpralls anzeigen zu können. Ferner können auch Aufprallsensoren vorgesehen sein, die einen mechanischen Aufprall detektieren, indem z.B. ein elektrischer Kontakt unterbrochen wird.

Der Sensor 11 ist bevorzugt am Fahrzeugdach angeordnet, so dass der Kopf des Fahrers einfach erfasst werden kann. In einer ersten Ausführungsform kann der Sensor 11 im sichtbaren Bereich des Lichts die Position des Kopfes erfassen. Es ist jedoch auch möglich, mittels Licht im Infrarotbereich zu detektieren. In einer weiteren Ausführungsform können auch hierzu nicht gezeigte Infrarotbeleuchtungselemente im Fahrzeug angeordnet sein, so dass auch im Dunkeln der Kopf des Passagiers sicher erfasst werden kann. Über eine Datenleitung 17 ist der Sensor 11 mit der Auswerteeinheit 12 verbunden. Um sicherzustellen, wie die Kopfbewegung erfolgt, wird bevorzugt auch die Kopfneigung im Bezug zum Oberkörper über die Zeit erfasst.

Die Auswerteeinheit 12 weist eine Speichereinheit 8 auf, in der kritische Bewegungsabläufe des Kopfes bzw. der Körperhaltung des Passagiers abgelegt sind. Insbesondere sind hierbei Grenzwerte für die Beschleunigung des Kopfes abgelegt, die anhand der erfassten Bewegung des Kopfes detektiert wird. Wird z.B. eine Beschleunigung des Kopfes erfasst, die über einen mehrfachen, im Allgemeinen über einem drei- bis achtfachen der Erdbeschleunigung liegt, so wird von einer vorliegenden Kollision ausgegangen. Von einer Kollision kann auch dann ausgegangen werden, wenn der Kopf mit dem drei- bis fünffachen der Erdbeschleunigung beschleunigt wird und zugleich die Beschleunigungssensoren 14 oder die weiteren Sensoren 15 im Fahrzeug eine Kollision des Fahrzeugs detektieren. Die Grenzwerte für eine entsprechende Beschleunigung sind bevorzugt ebenfalls in dem Speicher 8 abgelegt.

Ermittelt die Auswerteeinheit 12 eine Kollision, so steuert sie über eine Datenleitung 18 eine Stelleinheit 19 an, die eine Kopfstütze 20 so nach vorne bewegt, dass eine gestrichelt skizzierter Abstand 21 zwischen der Kopfstütze 20 und dem Kopf 3 möglichst vermindert wird. Die Bewegung der Kopfstütze ist durch einen Pfeil 22 skizziert dargestellt. In einer bevorzugten Ausführungsform wird ein Zeitpunkt der Bewegung der Kopfstütze auf die Bewegung des Kopfes abgestimmt. Hierdurch wird erreicht, dass der Kopf sicher durch die Kopfstütze aufgefangen wird. Insbesondere wird hierdurch vermieden, dass die Kopfstütze einen zusätzlichen, schädlichen Impuls auf den Kopf 3 ausübt. Ferner wird auch erreicht, dass die Kopfstütze rechtzeitig bereitsteht, um den Kopf 3 aufzufangen und die auf den Kopf wirkende Beschleunigung zu reduzieren.

In einer weiteren, bevorzugten Ausführungsform ist die Stelleinheit 19 dazu ausgelegt, auch die Höhe der Kopfstütze so zu verändern, dass sie gegebenenfalls in Pfeilrichtung 23 oder in die nicht gezeichnete Gegenrichtung bewegt wird, um die Höhe der Kopfstütze an die Position des Kopfes anzupassen. Die Position des Kopfes wird bevorzugt ebenfalls mittels dem Sensor 11 bestimmt. Selbst wenn der Fahrer zu Fahrtbeginn die Kopfstütze richtig eingestellt hat, kann er durch eine Variation der Sitzhaltung während der Fahrt seine Sitzhaltung so verändert haben, dass die Kopfstütze für ihn nicht mehr optimal positioniert ist. Bevorzugt wird daher die Position des Kopfes 3 dahingehend ausgewertet, welche Höhe der Kopfstütze bei der Kollision nun vorgesehen sein muss, um den Passagier optimal zu schützen. Die Auswerteeinheit 12 wertet die ermittelte, zu erwartende Kopfposition bei einem Zusammentreffen des Kopfes 3 und der Kopfstütze 20 aus und regelt die Kopfstütze 20 in eine optimale Position. Hiermit kann ein mögliches Überstrecken des Kopfes 3 über eine Oberseite 24 der Kopfstütze 20 hinaus verhindert werden. Zugleich wird die Auflagefläche des Kopfes 3 gegenüber der Kopfstütze 20 optimiert. Auch ein Einstellwinkel der Kopfstütze 20 kann entsprechend gewählt werden, so dass eine Bewegung der Kopfstütze 20 in Pfeilrichtung 22 ebenfalls in Abhängigkeit von der Bewegung des Kopfes 3 erfolgt.

In einer weiteren Ausführungsform wertet die Auswerteeinheit 12 die Beschleunigungssensoren 14 und/oder die weiteren Sensoren 15 derart aus, dass eine Richtung der Beschleunigung, die auf das Fahrzeug wirkt, berücksichtigt wird. Wird eine Bewegung des Kopfes erfasst, so werden diese Daten bevorzugt zusätzlich herangezogen, um eine voraussichtliche weitere Bewegung des Kopfes vorherzusagen, um somit die Kopfstütze 20 optimal einstellen zu können. Zur Auswertung sind verschiedene Bewegungsabläufe, insbesondere für Aufprallvorgänge aus verschiedenen Richtungen auf das Fahrzeug, in dem Speicher 8 abgelegt.

Die Stelleinheit 19 kann eine motorische Stelleinheit sein. In einer weiteren Ausführungsform kann auch eine Vorspannung der Kopfstütze vorgegeben sein, wobei durch eine Entriegelung eines Haltemechanismus, z.B. eines Rasthakens oder eines Magneten, die Kopfstütze durch die Vorspannung einer Feder oder eines ähnlichen Spannelements in die gewünschte Position bewegt wird. In einer weiteren Ausführungsform kann eine in der Figur 1 nicht gezeigte Stelleinheit auch dazu vorgesehen sein, die Position der Rückenlehne an eine zu erwartende Bewegung des Passagiers anzupassen, um insgesamt nicht nur den Kopf, sondern den gesamten Oberkörper des Passagiers in optimaler Weise auffangen zu können.

Ist der Sitz nicht belegt bzw. kann die Positionierung der Kopfstütze nicht zum Schutz des entsprechenden Passagiers beitragen, weil der Passagier z.B. zu klein ist, wird eine Betätigung der Kopfstütze 20 nach Aufforderung durch die Auswerteinheit unterdrückt.

In einer bevorzugten Ausführungsform ist die Auswerteinheit 12 ferner dazu vorgesehen, auch weitere Passagierschutzeinheiten im Fahrzeug auszulösen, z.B. einen Airbag. Z.B. können auch entsprechend ein Seitenairbag oder ein Kopfstützen-Airbag entsprechend ausgelöst werden.

In der Figur 2 ist die Bearbeitung der eingehenden Signale der Auswerteeinheit 12 im Detail dargestellt. Eine Recheneinheit 5 verarbeitet die von dem Sensor 11 übertragenen Signale 30 des Bewegungsablaufs des Körperteils des Fahrzeugpassagiers. Der gemessene Bewegungsablauf wird entweder kontinuierlich oder in Abhängigkeit von einem Triggersignal mit Referenzbewegungsabläufen verglichen, die in dem Speicher 8 abgelegt sind. Der Speicher 8 verfügt über eine Datenbank der Referenz-Bewegungsabläufe, die bevorzugt charakteristische Insassenbewegungen umfassen, die mit hoher Wahrscheinlichkeit zu einer Verletzung des Fahrers, insbesondere zu einem Halswirbelsäulen-Beschleunigungstrauma führen können. Jedem Referenz-Bewegungsablauf, der in dem Speicher 8 abgelegt ist, ist eine optimale Strategie zur Ansteuerung von Systemen zugeordnet, um ein Halswirbelsäulen-Beschleunigungstrauma geeignet zu vermeiden. Die Ansteuercharakteristik kann dabei verschiedenen Personengrößen zugeordnet sein. Hierzu sind verschiedene Personenklassen bekannt, bei denen jeweils bestimmte Normgrößen angenommen werden, um eine Einstellung zu erleichtern. Jedoch können auch auf konkret vermessene Größen hin Einstellungen erfolgen.

Eine Triggerung kann insbesondere durch ein von den Beschleunigungssensoren 14 übertragenes Triggersignal 31 oder durch ein von den weiteren Sensoren übertragenes Triggersignal 32 erfolgen. Die Signale 31, 32 werden bevorzugt über einen geeigneten Datenbus an die Recheneinheit 5 übertragen. Die Recheneinheit 5 verfügt über einen Schwellwertgeber, bei dem die Signale 31, 32 mit vorgegebenen Schwellwerten verglichen werden, wobei die Triggerung in Abhängigkeit von einer Überschreitung dieser Schwellwerte erfolgt. Hierdurch können ein heftiges Bremsen oder ein heftiges Beschleunigen als Auslöser für eine Reaktion der Passagierschutzeinheit vermieden werden. In Abhängigkeit von den Beschleunigungssensoren können dabei durch die Recheneinheit 5 diejenigen Bewegungsabläufe für einen Vergleich ausgewählt werden, die sich bei dem jeweiligen, zu erwartenden Kollisionsverhalten ergeben. Somit können z.B. bei einem seitlichen Zusammenstoß andere Kurven für den Vergleich herangezogen werden, als für den Fall, dass das Fahrzeug auf ein Hindernis auffährt oder dass auf das Fahrzeug selbst, wenn es steht, ein anderes Fahrzeug auffährt. Damit kann die Abstimmung und die Bestimmungsgenauigkeit der Bewegung des Kopfes erhöht und die Verarbeitung beschleunigt werden, da lediglich mit den tatsächlich relevanten Daten verglichen werden muss. Entsprechend einem jeweiligen zu erwartenden Zusammenstoß und entsprechend der zu erwartenden Bewegung des Kopfes wird ein Ansteuersignal 33 an die Stelleinheit 19 zur Ansteuerung der Kopfstütze ausgegeben. Es wird diejenige Ansteuerung der Kopfstütze 20 vorgenommen, die einem erwarteten, gespeicherten Bewegungsablauf zugeordnet ist. Es wird dabei derjenige gespeicherte Bewegungsablauf herangezogen, der am besten mit dem gemessenen Bewegungsablauf des Passagiers übereinstimmt.

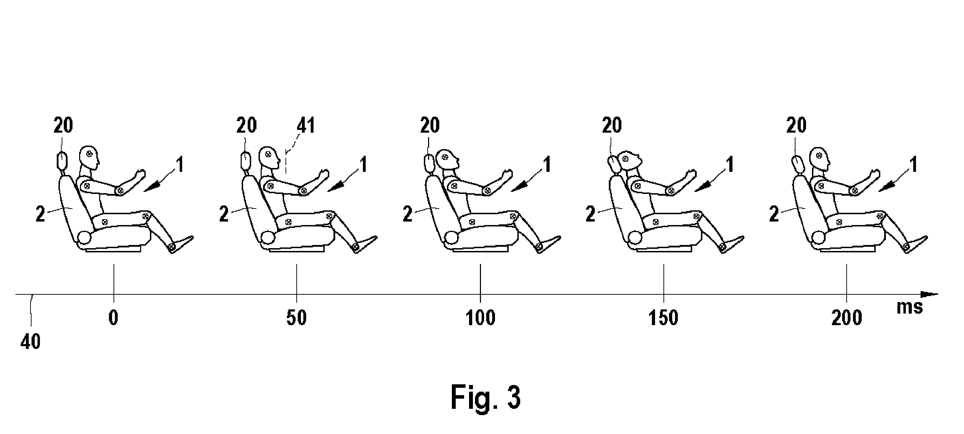

In der Figur 3 ist ein Ablauf eines typischen Referenz-Bewegungsablaufes gezeigt, der bei einem Heckaufprall eines gegnerischen Unfallfahrzeuges auftritt. Verschiedene Zustände der Körperhaltung des Passagiers sind zu verschiedenen Zeiten über einer Zeitachse 40 aufgetragen. Aus Gründen der Übersichtlichkeit ist lediglich zu den Zeitpunkten 0, 50 ms, 100 ms, 150 ms, 200 ms ein aktueller Bewegungszustand des Passagiers dargestellt. Hierbei ist die Zeitskala in Bezug auf einen Crash-Zeitpunkt 0 gewählt. Bevorzugt erfolgt jedoch eine Positionsbestimmung des Passagiers zumindest alle 5 ms. Bevorzugt wird eine Auflösung der Bewegungsabläufe mit Zeitabständen von jeweils 1 ms angestrebt. In den den Zeitpunkten jeweils zugeordneten Zuständen ist jeweils der Sitz 2 und der Passagier 1 gezeigt. Infolge des Heckaufpralls wird der Kopf zurückbewegt, so dass ein Aufprallen auf die Kopfstütze erwartet wird. Die Kopfstütze wird dabei nach 60 ms so verkippt, dass der Weg des Kopfes zu der Kopfstütze zumindest um einige cm verkürzt wird und die Auflagefläche der Kopfstütze zu dem Kopf vergrößert wird. 150 ms nach dem Aufprall wird der Abstand zwischen dem Kopf und der Kopfstütze wieder vergrößert. Die Kopfstütze verbleibt in der verkippten Position und kann durch den Fahrer oder Werkstatt-Personal im Anschluss an den Zusammenstoß manuell wieder in die Ausgangslage zurückgesetzt werden. In einer weiteren Ausführungsform kann die Stelleinheit 19 auch so ausgeführt sein, dass die Kopfstütze nach dem Zusammenstoß automatisch wieder in die Ausgangslage zurückgestellt wird.

Bei der in der Figur 3 gezeigten Abfolge lässt sich aus der räumlichen Änderung der Position des Kopfes herleiten, dass zwischen dem Zeitpunkt 30 ms und dem Zeitpunkt 60 ms eine Beschleunigung des Kopfes derart erfolgt sein muss, dass mindestens eine Beschleunigung der achtfachen Erdbeschleunigung vorgelegen haben muss. Durch eine Überschreitung dieser Beschleunigungsgrenze wird durch die Auswerteeinheit 12 das Verkippen der Kopfstütze 20 ausgelöst.

In einer weiteren Ausführungsform kann die Position des Kopfes durch den Sensor 11 auch ständig detektiert werden. Zur Unterstützung kann ferner ein Abstandssensor 25 in die Kopfstütze integriert sein, mittels dem eine noch genauere Bestimmung der Kopfposition möglich ist. In einer weiteren Ausführungsform können anstelle eines einzigen Sensors 11 auch eine Vielzahl von Sensoren vorgesehen sein, die ein Sensorfeld bilden. Gegebenfalls sind damit Kreuzmessungen möglich, die eine noch genauere Positionierung des Kopfes im Raum ermöglichen.

Bei dem Zeiteintrag 50 ms ist an dem Kopf des Fahrers ein Bereich 41 durch gestrichelte Linien hervorgehoben. Dieser Bereich wird als derjenige Bereich angesehen, in dem nach der Erfassung der bisherigen Kopfbewegung nunmehr die Position des Kopfes zu erwarten ist. Der Bereich 41 wird bei einer anschließenden Auswertung mit dem Sensor 11 zuerst ausgewertet, um die Auswertung zu beschleunigen.

## Patentansprüche

1. Passagierschutzeinrichtung in einem Fahrzeug mit wenigstens einem Sensor (11) zur Erfassung einer Bewegung wenigstens eines Körperteils (3) des Passagiers (1) in dem Fahrzeug und mit einer Auswerteeinheit (5, 12) zur Ansteuerung einer Passagierschutzeinheit (19, 20) in Abhängigkeit von der erfassten Bewegung des wenigstens einen Körperteils (3).

2. Passagierschutzeinrichtung nach einem der vorherigen Ansprüche, **gekennzeichnet durch** eine der Auswerteeinheit (12) zugeordnete Speichereinheit (8), wobei in der Speichereinheit (8) kritische Bewegungsabläufe des wenigstens einen Körperteils und/oder Grenzwerte zur Ermittlung kritischer Bewegungsabläufe des wenigstens einen Körperteils (3) abgelegt sind.

3. Passagierschutzeinrichtung nach Anspruch 1, **dadurch gekennzeichnet, dass** der Sensor (11) zur Erfassung einer Bewegung des Kopfes (3) des Passagiers (1) ausgelegt ist.

4. Passagierschutzeinrichtung nach einem der vorherigen Ansprüche, **dadurch gekennzeichnet, dass** die Passagierschutzeinheit als eine Stelleinheit (19) für eine Kopfstütze (20) und/oder einer Rückenlehne zur Anpassung der Position der Kopfstütze (20) und/oder der Rückenlehne ausgebildet wird und dass die Stelleinheit (19) von der Auswerteeinheit (12) so angesteuert wird, dass die Position der Kopfstütze (20) und/oder der Rückenlehne an die erfasste Bewegung des wenigstens einen Körperteils (3) angepasst wird.

5. Passagierschutzeinrichtung nach Anspruch 4, **gekennzeichnet durch** eine Abstandsmesseinheit (25) in der Kopfstütze (20) zur Abstandsmessung zu dem Kopf (3) des Passagiers.

6. Passagierschutzeinrichtung nach einem der vorherigen Ansprüche, **dadurch gekennzeichnet, dass** der wenigstens eine Sensor (11) als ein optischer Sensor, als ein kapazitiver Sensor oder als ein Ultraschallsensor ausgefiihrt ist.

7. Passagierschutzeinrichtung nach einem der vorherigen Ansprüche, **gekennzeichnet durch** eine der Auswerteeinheit (5, 12) zugeordnete Filtereinheit zur Prädiktion der Position (41) des wenigstens einen Körperteils (3) nach einer vorhergehenden Positionsbestimmung des Körperteils (3).

8. Passagierschutzeinrichtung nach einem der vorherigen Ansprüche, **gekennzeichnet durch** eine bevorzugt der Auswerteeinheit (12) zugeordnete Bewertungseinheit zur Bewertung der Größe und/oder des Gewichts des Passagiers, um die Passagierschutzeinheit in Abhängigkeit von der Größe und/oder des Gewichts des Passagiers anzusteuern.

9. Passagierschutzeinrichtungen nach einem der vorherigen Ansprüche, **dadurch gekennzeichnet, dass** die Auswerteeinheit (12) eine Betätigung der Passagierschutzeinheit unterdrückt, wenn der Sensor (11)an einer ihm zugeordneten Position keinen Passagier erfasst.

10. Verfahren zur Ansteuerung einer Passagierschutzeinheit in einem Fahrzeug, wobei mit einem Sensor eine Bewegung wenigstens eines Körperteils des Passagiers erfasst wird und wobei die erfasste Bewegung bewertet wird, um die Passagierschutzeinheit in Abhängigkeit von der erfassten Bewegung anzusteuern.

11. Verfahren nach Anspruch 10, **dadurch gekennzeichnet, dass** eine Kopfstütze in Abhängigkeit von der Bewegung des Kopfes des Passagiers angesteuert wird.
